Europäisches Patentamt

(19) European Patent Office

Office européen des brevets

(11) **EP 1 273 949 B1**

(12) **EUROPEAN PATENT SPECIFICATION**

(45) Date of publication and mention
of the grant of the patent:
**04.08.2004 Bulletin 2004/32**

(51) Int Cl.7: **G02B 13/22**, G02B 11/34,
G02B 9/62, G02B 13/00

(21) Application number: **02013168.6**

(22) Date of filing: **14.06.2002**

(54) **Double telecentric objective lens**

Doppeltelezentrisches Objektiv

Objectif deux fois télécentrique

(84) Designated Contracting States:
**DE FR GB IT**

(30) Priority: **19.06.2001 JP 2001185241**

(43) Date of publication of application:
**08.01.2003 Bulletin 2003/02**

(73) Proprietor: **Mitutoyo Corporation
Kanagawa 213-0012 (JP)**

(72) Inventors:
• **Nagahama, Tatsuya, c/o Mitutoyo Corporation
Kawasaki, Kanagawa 213-0012 (JP)**

• **Arisawa, Katsuyoshi, c/o Mitutoyo Corporation
Kawasaki, Kanagawa 213-0012 (JP)**

(74) Representative: **Hoffmann, Eckart, Dipl.-Ing.
Patentanwalt,
Bahnhofstrasse 103
82166 Gräfelfing (DE)**

(56) References cited:
**EP-A- 0 723 173**       **GB-A- 1 248 362**
**US-A- 5 696 631**       **US-A- 5 708 532**

**Description**

BACKGROUND OF THE INVENTION

1. Field of the Invention

The present invention relates to a double telecentric objective lens.

2. Description of the Related Art

With recent developments in image processing technology, various image processing and measuring apparatuses have been commercialized. Objects to be measured are diversified and complicated, and there is a need to measure, by image processing and measuring apparatuses, relatively large and thick machine parts, cutting tools, electronic parts, and the like that have hitherto been measured by measuring projectors.

For this reason, the emergence of a telecentric objective lens having a low magnification of 1X or less is required, in which the field of view is wide, the depth of field is large enough to measure thick machine parts having a stepped portion, and the like, and the telecentricity (the degree of parallelism between the principal ray of an off-axis beam and the optical axis) is properly corrected.

Preferable as a telecentric objective lens used for measurement is a so-called double telecentric optical objective system in which lenses are divided into two groups, a front group and a rear group, the back focal point of the front group and the front focal point of the rear group coincide with each other, and a diaphragm is placed at the position where the focus points coincide. This is because the image magnification of the double telecentric optical system is basically determined only by the focal lengths of the front group and the rear group, regardless of the position of an object.

Such objective systems are known from US-A-5 708 532 and GB 1 248 362.

SUMMARY OF THE INVENTION

In view of such circumstances, it is an object of the present invention to provide a double telecentric objective lens having a magnification of less than 1.0X in which aberrations and the telecentricity of the principal ray of an off-axis beam are properly corrected, and which is suitable for use in an image processing and measuring apparatus.

The above object is achieved with a double telecentric objective lens according to claim 1. Advantageous embodiments of the invention are subject-matter of the dependent claims.

According to one aspect, the present invention provides a double telecentric objective lens having a double telecentric optical system. The double telecentric optical system includes a front group having a positive refractive power as a whole, and a rear group having a positive refractive power as a whole. The rear focus of the front group and the front focus of the rear group coincide with each other, and a diaphragm is placed at the position where the focuses coincide. The front group includes a first unit formed of a cemented lens composed of a convex lens and a concave lens, and having a positive refractive power as a whole, and a second unit including a convex lens or a cemented lens composed of a convex lens and a concave lens, and a further concave lens, arranged in that order from the object side, and having a positive refractive power as a whole. The rear group includes a third unit including a concave lens and a cemented lens composed of a convex lens and a concave lens, and having a positive refractive power as a whole, and a fourth unit formed of a cemented lens composed of a convex lens and a concave lens, and having a positive refractive power as a whole. The double telecentric objective lens satisfies the following conditions:

$$n_{1n}-n_{1p}> 0.1 \qquad (1)$$

$$\nu_{1p}-\nu_{1n} > 25 \qquad (2)$$

$$0.3f_F < |r_{2n}| < 0.5f_F \qquad (3)$$

$$1.4 < (r_{2p}/r_{2n}) < 2.7 \qquad (4)$$

$$n_{3n} < n_{3p} \qquad\qquad (5)$$

where $n_{1p}$ and $\nu_{1p}$ respectively represent the refractive index and the Abbe's number of the convex lens of the first unit, $n_{1n}$ and $\nu_{1n}$ respectively represent the refractive index and the Abbe's number of the concave lens of the first unit, $r_{2p}$ represents the radius of curvature of that surface of the convex lens or the cemented lens composed of the convex lens and the concave lens in the second unit that is furthermost from the object, $r_{2n}$ represents the radius of curvature of the object-side surface of the concave lens in the second unit, $f_F$ represents the focal length of the entire front group, $n_{3n}$ represents the average refractive index of the concave lenses in the third unit, and $n_{3p}$ represents the refractive index of the convex lens in the third unit, the refractive indices and the focal length being values for the d-line having a wavelength of 587.56 nm.

Inequation (1) specifies the refractive indices of the lenses included in the first unit.

If inequation (1) is not satisfied, the difference in refractive index between the convex lens and the concave lens decreases. Therefore, when trying to correct spherical aberration and the telecentricity of the principal ray, the radius of curvature of the bonding surface decreases, and a high-order aberration, such as spherical aberration, occurs. Moreover, in case the principal ray emitted from the vicinity of the object and in parallel with the optical axis greatly deviates from the center of the telecentric diaphragm, the principal ray of a light beam passing through the center of the telecentric diaphragm forms a large angle with respect to the optical axis.

When an object having a stepped portion is measured with an objective lens not satisfying inequation (1), serious measurement errors occur around the object.

Inequation (2) specifies the Abbe's numbers of the lenses used in the first unit.

If chromatic aberration is corrected using glass materials that do not satisfy inequation (2), the refractive powers of both the convex lens and the concave lens must be increased, and this results in a high-order aberration such as spherical aberration or comatic aberration. The telecentricity of an off-axis beam also deteriorates. The high-order aberration cannot be completely corrected by other lens units.

In other words, inequations (1) and (2) are determined so as to minimize spherical aberration, comatic aberration, and chromatic aberration, and the deterioration of telecentricity of an off-axis principal ray.

Inequation (3) specifies the radius of curvature of an object-side surface of the concave lens in the second unit.

When the radius of curvature exceeds the upper limit in inequation (3), spherical aberration or the like that occurs at another position is not sufficiently corrected, and correction of aberration in the entire front group is insufficient. The telecentricity of the principal ray is also not completely corrected.

When the radius of curvature falls below the lower limit in inequation (3), an excessive positive aberration occurs at this surface. In this case, the balance cannot be achieved even by producing negative aberrations at another surface, or a large high-order aberration occurs.

Inequation (4) specifies the radius of curvature $r_{2p}$ of that surface of the convex lens or the cemented lens composed of the convex lens and the concave lens that is furthermost from the object in the second unit, and the radius of curvature $r_{2n}$ of the object-side surface of the concave lens in the second unit.

This condition is necessary to achieve a balance between negative aberrations caused at the surface having the radius of curvature $r_{2p}$ and positive aberrations caused at the surface having the radius of curvature $r_{2n}$, to correct aberrations in the entire front group including residual aberration caused in the first unit, and to maintain high telecentricity of the principal ray emitted from the object.

Positive aberrations at the surface with $r_{2n}$ increase above the upper limit in inequation (4), and negative aberrations at the surface with $r_{2p}$ increase below the lower limit. When any of the aberrations is compensated for in another unit, the inevitable degree of compensation increases. Consequently, high-order aberration cannot be prevented, and the telecentricity of the principal ray of an off-axis beam deteriorates.

That is, the conditions in inequations (3) and (4) are necessary to maintain the balance of the aberrations in the entire front group, and to properly correct the telecentricity of the principal ray of the off-axis beam.

Inequation (5) specifies the refractive indices of the convex lens and the concave lenses in the third unit.

In order to minimize aberrations in the third unit including high-order aberrations, such as spherical aberration and comatic aberration, the convex lens is made of a glass material having a high refractive index. Further, in order to limit the Petzval sum so as to properly correct astigmatism, the convex lens is made of a glass material having a high refractive index, and the concave lenses are made of a glass material having a low refractive index.

When the convex lens and the concave lenses are made of glass materials that do not satisfy inequation (5), the Petzval sum increases, and therefore, astigmatism increases.

Satisfying inequation (5) is necessary, in particular, to properly correct astigmatism in the entire optical system including the front group and the rear group.

Further objects, features and advantages of the present invention will become apparent from the following description of the preferred embodiments with reference to the attached drawings.

BRIEF DESCRIPTION OF THE DRAWINGS

| Fig. 1 | is a structural view of a double telecentric objective lens according to a first embodiment of the present invention; |
|---|---|
| Fig. 2A, 2B, and 2C | are explanatory views showing spherical aberration, astigmatism, and distortion in the double telecentric objective lens of the first embodiment; |
| Fig. 3 | is a structural view of a double telecentric objective lens according to a second embodiment of the present invention; |
| Fig. 4A, 4B, and 4C | are explanatory views showing spherical aberration, astigmatism, and distortion in the double telecentric objective lens of the second embodiment; |
| Fig. 5 | is a structural view of a double telecentric objective lens according to a third embodiment of the present invention; |
| Fig. 6A, 6B, and 6C | are explanatory views showing spherical aberration, astigmatism, and distortion in the double telecentric objective lens of the third embodiment; |
| Fig. 7 | is a structural view of a double telecentric objective lens according to a fourth embodiment of the present invention; and |
| Fig. 8A, 8B, and 8C | are explanatory views showing spherical aberration, astigmatism, and distortion in the double telecentric objective lens of the fourth embodiment. |

DESCRIPTION OF THE PREFERRED EMBODIMENTS

Embodiments of the present invention will be described below with reference to the attached drawings.

First Embodiment

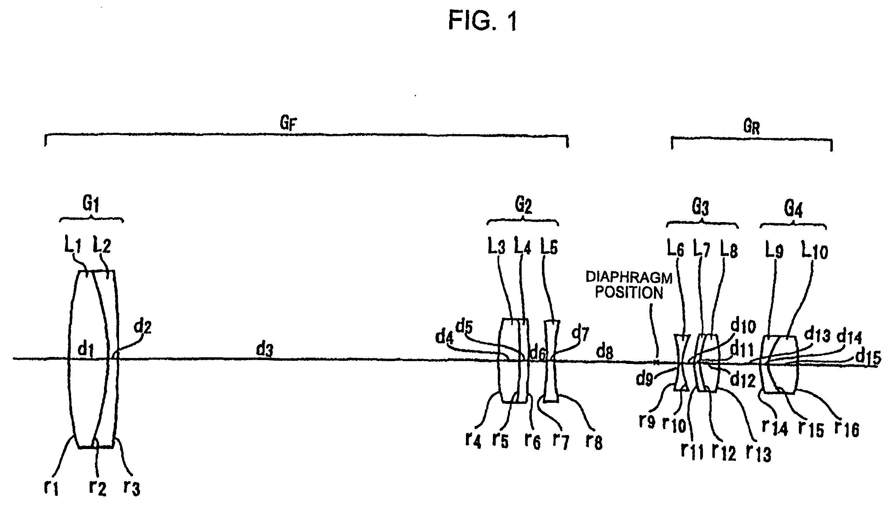

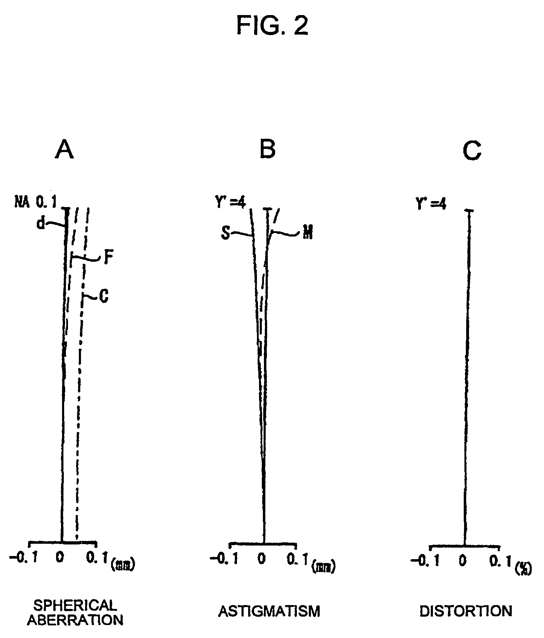

Fig. 1 shows the configuration of a double telecentric objective lens according to a first embodiment of the present invention, and Fig. 2A, 2B, and 2C respectively show spherical aberration, astigmatism, and distortion in the first embodiment.

A double telecentric objective lens of this embodiment is composed of a front group $G_F$ having a positive refractive power as a whole, and a rear group $G_R$ having a positive refractive power as a whole. The front group $G_F$ and the rear group $G_R$ are placed so that the back focus of the front group $G_F$ and the front focus of the rear group $G_R$ coincide with each other. A diaphragm is placed at the position where the focuses coincide. Thus, a double telecentric optical system is constructed.

The front group $G_F$ comprises a first unit $G_1$ formed of a cemented lens composed of a convex lens $L_1$ and a concave lens $L_2$, and having a positive refractive power as a whole, and a second unit $G_2$ including a cemented lens composed of a convex lens $L_3$ and a concave lens $L_4$, and a concave lens $L_5$ arranged in that order from the object side, and having a positive refractive power as a whole.

The rear group $G_R$ includes a third unit $G_3$ formed of a concave lens $L_6$ and a cemented lens composed of a concave lens $L_7$ and a convex lens $L_8$, and having a positive refractive power as a whole, and a fourth unit $G_4$ formed of a cemented lens composed of a concave lens $L_9$ and a convex lens $L_{10}$, and having a positive refractive power as a whole.

In such a configuration, as an example the optical constants of the lenses are set as in Table 1 on conditions in which the object position is -150.021 mm, the focal length of the front group (the focal length of the entire front group) $f_F$ is 150.02 mm, the image position is 33.170 mm, the focal length of the rear group is 30.02 mm, and the (imaging) magnification is -0.2X. The position of the diaphragm is placed at a position offset by 32.369 mm from a surface $r_6$ toward the image.

Herein, $L_1$ to $L_{10}$ denote lenses, $r_1$ to $r_{16}$ denote the radii of curvature of the lens surfaces, $d_1$ to $d_{15}$ denote

the thicknesses of the lenses or the spaces therebetween, $n_1$ to $n_{10}$ denote the d-line refractive indices of the glass materials of the lenses, and $\nu_1$ to $\nu_{10}$ denote the Abbe's numbers of those glass materials.

Table 1

| | | | | | | | | | |
|---|---|---|---|---|---|---|---|---|---|
| $r_1$ | 124.891 | $d_1$ | 12 | $n_1$ | 1.48749 | $\nu_1$ | 70.2 | $L_1$ |
| $r_2$ | -68.541 | $d_2$ | 3 | $n_2$ | 1.62004 | $\nu_2$ | 36.3 | $L_2$ |
| $r_3$ | -192.006 | $d_3$ | 120 | | | | | |
| $r_4$ | 62.481 | $d_4$ | 7 | $n_3$ | 1.6968 | $\nu_3$ | 55.5 | $L_3$ |
| $r_5$ | -81.461 | $d_5$ | 3 | $n_4$ | 1.64769 | $\nu_4$ | 33.8 | $L_4$ |
| $r_6$ | -112.691 | $d_6$ | 5.9 | | | | | |
| $r_7$ | -72.237 | $d_7$ | 2.5 | $n_5$ | 1.65844 | $\nu_5$ | 50.9 | $L_5$ |
| $r_8$ | 66.46 | $d_8$ | 39.604 | | | | | |
| $r_9$ | -28.104 | $d_9$ | 1.3 | $n_6$ | 1.51742 | $\nu_6$ | 52.4 | $L_6$ |
| $r_{10}$ | 14.468 | $d_{10}$ | 4.1 | | | | | |
| $r_{11}$ | 35.034 | $d_{11}$ | 1.5 | $n_7$ | 1.59551 | $\nu_7$ | 39.2 | $L_7$ |
| $r_{12}$ | 15.477 | $d_{12}$ | 6.3 | $n_8$ | 1.7432 | $\nu_8$ | 49.3 | $L_8$ |
| $r_{13}$ | -32.728 | $d_{13}$ | 13 | | | | | |
| $r_{14}$ | 41.016 | $d_{14}$ | 2.4 | $n_9$ | 1.6727 | $\nu_9$ | 32.1 | $L_9$ |
| $r_{15}$ | 12.68 | $d_{15}$ | 8.6 | $n_{10}$ | 1.51633 | $\nu_{10}$ | 64.1 | $L_{10}$ |
| $r_{16}$ | -30.622 | | | | | | | |

Calculations are made using the above inequations (1) to (5) on the basis of the above optical constants of the lenses:

$$n_{1n} - n_{1p} = 0.13255$$

$$\nu_{1p} - \nu_{1n} = 33.9$$

$$|r_{2n}| = 0.48\, f_F$$

$$(r_{2p}/r_{2n}) = 1.56$$

$$n_{3n} = 1.55647 < n_{3p} = 1.7432$$

Hence, all the inequations (1) to (5) are satisfied.
That is, the following conditions are satisfied:

$$n_{1n} - n_{1p} > 0.1 \tag{1}$$

$$\nu_{1p} - \nu_{1n} > 25 \tag{2}$$

$$0.3 f_F < |r_{2n}| < 0.5 f_F \tag{3}$$

$$1.4 < (r_{2p}/r_{2n}) < 2.7 \tag{4}$$

$$n_{3n} < n_{3p} \qquad (5)$$

where $n_{1p}$ and $v_{1p}$ respectively represent the refractive index and the Abbe's number of the convex lens of the first unit $G_1$, $n_{1n}$ and $v_{1n}$ respectively represent the refractive index and the Abbe's number of the concave lens of the first unit $G_1$, $r_{2p}$ represents the radius of curvature of that surface of the convex lens or the cemented lens of the convex lens and the concave lens in the second unit $G_2$ that is furthermost from the object, $r_{2n}$ represents the radius of curvature of the object-side surface of the concave lens in the second unit $G_2$, $f_F$ represents the focal length of the entire front group $G_F$, $n_{3n}$ represents the average refractive index of the concave lenses in the third unit $G_3$ (and being defined as $(n_6+n_7)/2$ for Fig. 1), $n_{3p}$ represents the refractive index of the convex lens in the third unit $G_3$, wherein the refractive indices and the focal length are values for the d-line having a wavelength of 587.56 nm.

Fig. 2A, 2B, and 2C respectively show spherical aberration, astigmatism, and distortion in this embodiment. In these figures, d, F, and C represent the spherical aberration for the d-line, the F-line, and the C-line, respectively, NA represents the numerical aperture on the image side, Y' represents the image height, S represents "Sagital" and M represents "Meridional". Fig. 2A, 2B, and 2C are obtained by tracing a light beam from the object toward the image, and show that the aberrations are corrected properly.

Table 2 shows the telecentricities of the principal ray of an off-axis beam when the object height is 10 mm, 14 mm, and 20 mm. The signs + and - on the angle in the telecentricity represent that the principal ray diverges and converges, respectively, with respect to the optical axis when the principal ray travels from the object toward the objective lens. Table 2 also shows that the telecentricity of the principal ray of the off-axis beam is corrected properly.

Table 2

| Object Height (Y) mm | 10 | 14 | 20 |
|---|---|---|---|
| Telecentricity | +0.0004° | +0.0011° | -0.0023° |

Second Embodiment

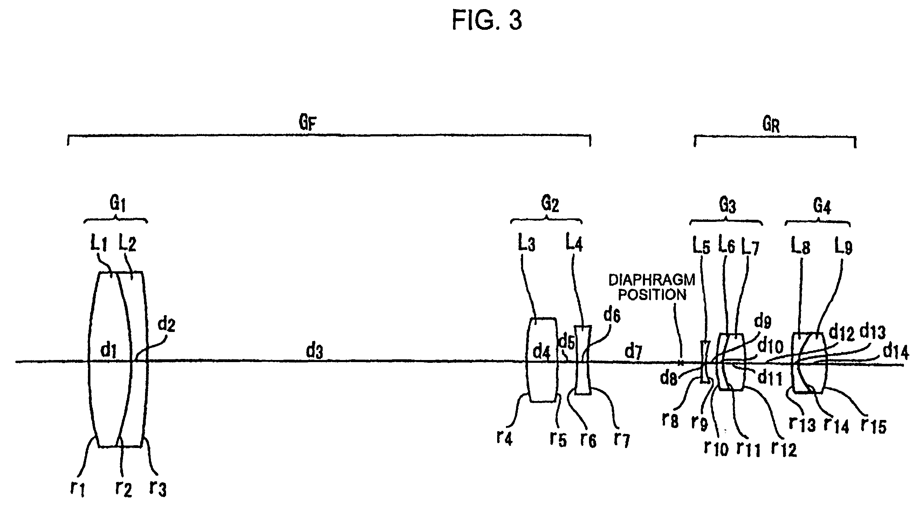

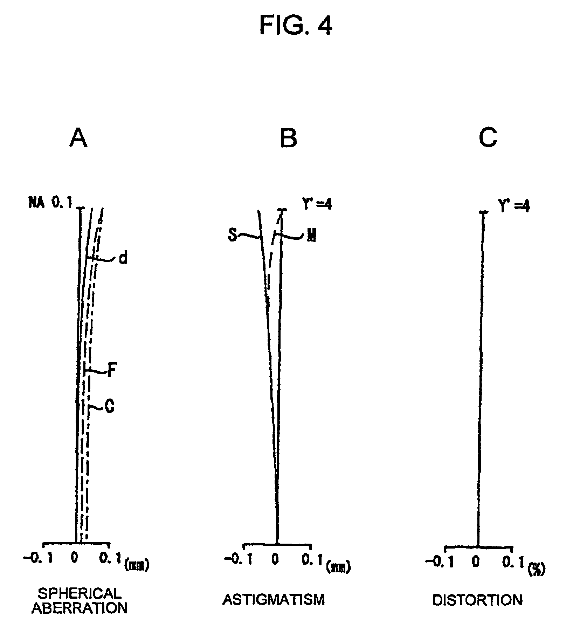

Fig. 3 shows the configuration of a double telecentric objective lens according to a second embodiment of the present invention, and Fig. 4A, 4B, and 4C respectively show spherical aberration, astigmatism, and distortion in the second embodiment.

The double telecentric objective lens of this embodiment is also composed of a front group $G_F$ having a positive refractive power as a whole and a rear group $G_R$ having a positive refractive power as a whole, in a manner similar to that in the first embodiment. The front group $G_F$ and the rear group $G_R$ are placed so that the back focus of the front group $G_F$ and the front focus of the rear group $G_R$ coincide with each other. A diaphragm is placed at the position where the focuses coincide.

The front group $G_F$ comprises a first unit $G_1$ formed of a cemented lens composed of a convex lens $L_1$ and a concave lens $L_2$, and having a positive refractive power as a whole, and a second unit $G_2$ including a convex lens $L_3$ and a concave lens $L_4$ arranged in that order from the object side, and having a positive refractive power as a whole.

The rear group $G_R$ comprises a third unit $G_3$ including a concave lens $L_5$ and a cemented lens composed of a concave lens $L_6$ and a convex lens $L_7$, and having a positive refractive power as a whole, and a fourth unit $G_4$ formed of a cemented lens composed of a concave lens $L_8$ and a convex lens $L_9$, and having a positive refractive power as a whole.

In such a configuration, as an example the optical constants of the lenses are set as in Table 3 on conditions that the object position is -151.702 mm, the focal length of the front group (the focal length of the entire front group) $f_F$ is 150.06 mm, the image position is 35.445 mm, the focal length of the rear group is 29.98 mm, and the imaging magnification is -0.2X. The diaphragm is placed at a position offset by 30.045 mm from a surface $r_7$ toward the image.

Herein, $L_1$ to $L_9$ denote lenses, $r_1$ to $r_{15}$ denote the radii of curvature of the lenses, $d_1$ to $d_{14}$ denote the thicknesses of the lenses or spaces therebetween, $n_1$ to $n_9$ denote the d-line refractive indices of the glass materials of the lenses, and $v_1$ to $v_9$ denote the Abbe's numbers of those glass materials.

Table 3

| | | | | | | | | | |
|---|---|---|---|---|---|---|---|---|---|
| $r_1$ | 125.36 | $d_1$ | 13 | $n_1$ | 1.48749 | $v_1$ | 70.2 | $L_1$ |
| $r_2$ | -67.71 | $d_2$ | 4.5 | $n_2$ | 1.62004 | $v_2$ | 36.3 | $L_2$ |
| $r_3$ | -187 | $d_3$ | 120 | | | | | |
| $r_4$ | 56.56 | $d_4$ | 10 | $n_3$ | 1.57099 | $v_3$ | 50.8 | $L_3$ |
| $r_5$ | -82.5 | $d_5$ | 6 | | | | | |

Table 3   (continued)

| | | | | | | | | |
|---|---|---|---|---|---|---|---|---|
| $r_6$ | -58.278 | $d_6$ | 3.8 | $n_4$ | 1.57501 | $\nu_4$ | 41.5 | $L_4$ |
| $r_7$ | 66.7 | $d_7$ | 36.278 | | | | | |
| $r_8$ | -40 | $d_8$ | 1.1 | $n_5$ | 1.6485 | $\nu_5$ | 53 | $L_5$ |
| $r_9$ | 14.003 | $d_9$ | 3.5 | | | | | |
| $r_{10}$ | 31.65 | $d_{10}$ | 2 | $n_6$ | 1.58144 | $\nu_6$ | 40.7 | $L_6$ |
| $r_{11}$ | 15.994 | $d_{11}$ | 7.3 | $n_7$ | 1.72916 | $\nu_7$ | 54.7 | $L_7$ |
| $r_{12}$ | -26.978 | $d_{12}$ | 14.2 | | | | | |
| $r_{13}$ | 58.74 | $d_{13}$ | 2 | $n_8$ | 1.60342 | $\nu_8$ | 38 | $L_8$ |
| $r_{14}$ | 12.496 | $d_{14}$ | 8.2 | $n_9$ | 1.48749 | $\nu_9$ | 70.2 | $L_9$ |
| $r_{15}$ | -25.654 | | | | | | | |

Calculations are made using the above inequations (1) to (5) on the basis of the above optical constants of the lenses:

$$n_{1n}-n_{1p} = 0.13255$$

$$\nu_{1p}-\nu_{1n} = 33.9$$

$$|r_{2n}| = 0.388\ f_F$$

$$(r_2p\ /r_2n\ ) = 1.42$$

$$n_{3n} = 1.61497 < n_{3p} = 1.72916$$

Hence, all the inequations (1) to (5) are satisfied.

Fig. 4A, 4B, and 4C respectively show spherical aberration, astigmatism, and distortion in this embodiment. In these figures, d, F, and C represent the spherical aberration for the d-line, the F-line, and the C-line, respectively, NA represents the numerical aperture on the image side, Y' represents the image height, S represents "Sagital" and M represents "Meridional". Fig. 4A, 4B, and 4C are obtained by tracing a light beam from the object toward the image, and show that the aberrations are corrected properly.

Table 4 shows the telecentricities of the principal ray of an off-axis beam when the object height is 10 mm, 14 mm, and 20 mm. The signs + and - on the angle in the telecentricity represent that the principal ray diverges and converges, respectively, with respect to the optical axis when the principal ray travels from the object toward the objective lens. Table 4 also shows that the telecentricity of the principal ray of the off-axis beam is corrected properly.

Table 4

| Object Height (Y) mm | 10 | 14 | 20 |
|---|---|---|---|
| Telecentricity | +0.0004° | +0.0011° | - 0.0022° |

Third Embodiment

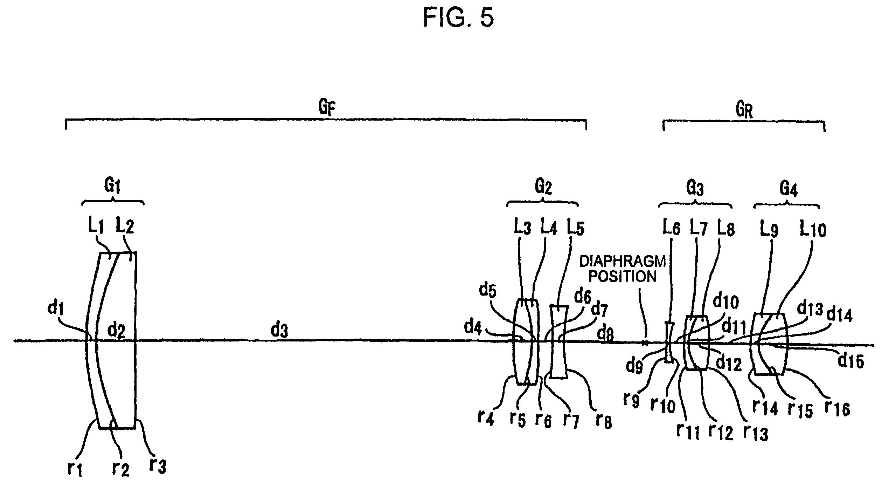

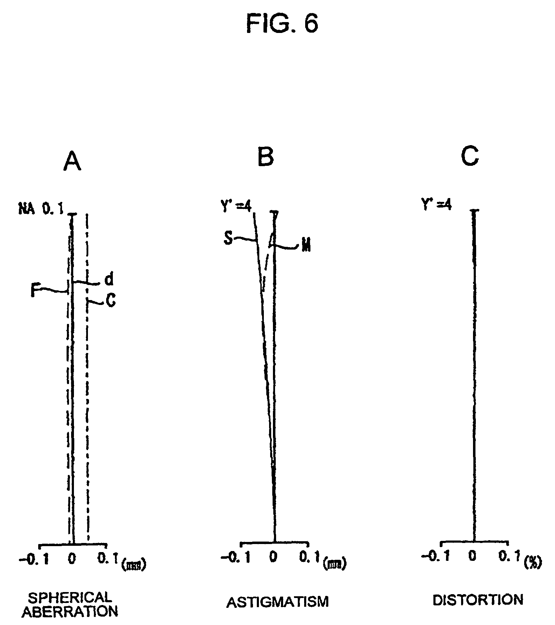

Fig. 5 shows the configuration of a double telecentric objective lens according to a third embodiment of the present invention, and Fig. 6A, 6B, and 6C respectively show spherical aberration, astigmatism, and distortion in the third embodiment.

The double telecentric objective lens of this embodiment is also composed of a front group $G_F$ having a positive refractive power as a whole, and a rear group $G_R$ having a positive refractive power as a whole, in a manner similar to that in the first embodiment. The front group $G_F$ and the rear group $G_R$ are placed so that the back focus of the front group $G_F$ and the front focus of the rear group $G_R$ coincide with each other. A diaphragm is placed at the position where the focuses coincide.

The front group $G_F$ comprises a first unit $G_1$ formed of a cemented lens composed of a concave lens $L_1$ and a convex lens $L_2$, and having a positive refractive power as a whole, and a second unit $G_2$ including a cemented lens composed of a convex lens $L_3$ and a concave lens $L_4$, and a concave lens $L_5$ arranged in that order from the object side, and having a positive refractive power as a whole.

The rear group $G_R$ comprises a third unit $G_3$ including a concave lens $L_6$, and a cemented lens composed of a concave lens $L_7$ and a convex lens $L_8$, and having a positive refractive power as a whole, and a fourth unit $G_4$ formed of a cemented lens composed of a concave lens $L_9$ and a convex lens $L_{10}$, and having a positive refractive power as a whole.

In such a configuration, as an example the optical constants of the lenses are set as in Table 5 on conditions that the object position is -159.623 mm, the focal length of the front group (the focal length of the entire front group) $f_F$ is 150.00 mm, the image position is 33.175 mm, the focal length of the rear group is 30.06 mm, and the imaging magnification is -0.2X. The diaphragm is placed at a position offset by 25.97 mm from a surface $r_8$ toward the image.

Herein, $L_1$ to $L_{10}$ denote lenses, $r_1$ to $r_{18}$ denote the radii of curvature of the lenses, $d_1$ to $d_{15}$ denote the thicknesses of the lenses or the spaces therebetween, $n_1$ to $n_{10}$ denote the d-line refractive indices of the glass materials of the lenses, and $\nu_1$ to $\nu_{10}$ denote the Abbe's numbers of those glass materials.

Table 5

| | | | | | | | | |
|---|---|---|---|---|---|---|---|---|
| $r_1$ | 95.262 | $d_1$ | 3 | $n_1$ | 1.8061 | $\nu_1$ | 33.3 | $L_1$ |
| $r_2$ | 51.5 | $d_2$ | 12 | $n_2$ | 1.62041 | $\nu_2$ | 60.3 | $L_2$ |
| $r_3$ | -840 | $d_3$ | 120 | | | | | |
| $r_4$ | 87.985 | $d_4$ | 6 | $n_3$ | 1.7433 | $\nu_3$ | 49.2 | $L_3$ |
| $r_5$ | -34.9 | $d_5$ | 2 | $n_4$ | 1.59551 | $\nu_4$ | 39.2 | $L_4$ |
| $r_6$ | -137 | $d_6$ | 5 | | | | | |
| $r_7$ | -52.483 | $d_7$ | 3 | $n_5$ | 1.60738 | $\nu_5$ | 56.8 | $L_5$ |
| $r_8$ | 88 | $d_8$ | 33.257 | | | | | |
| $r_9$ | -27.856 | $d_9$ | 1.2 | $n_6$ | 1.51742 | $\nu_6$ | 52.2 | $L_6$ |
| $r_{10}$ | 14.66 | $d_{10}$ | 4.1 | | | | | |
| $r_{11}$ | 35.285 | $d_{11}$ | 1.5 | $n_7$ | 1.59551 | $\nu_7$ | 39.2 | $L_7$ |
| $r_{12}$ | 15.64 | $d_{12}$ | 6.3 | $n_8$ | 1.7433 | $\nu_8$ | 49.2 | $L_8$ |
| $r_{13}$ | -32.822 | $d_{13}$ | 13 | | | | | |
| $r_{14}$ | 41.019 | $d_{14}$ | 2.5 | $n_9$ | 1.6727 | $\nu_9$ | 32.2 | $L_9$ |
| $r_{15}$ | 12.67 | $d_{15}$ | 8.6 | $n_{10}$ | 1.5168 | $\nu_{10}$ | 64.2 | $L_{10}$ |
| $r_{16}$ | -30.5 | | | | | | | |

Calculations are made using the above inequations (1) to (5) on the basis of the above optical constants of the lenses:

$$n_{1n}-n_{1p} = 0.18569$$

$$\nu_{1p}-\nu_{1n} = 27$$

$$|r_{2n}| = 0.35\, f_F$$

$$(r_{2d}/r_{2n}) = 2.6$$

$$n_{3n} = 1.55647 < n_{3p} = 1.7433$$

Hence, all the inequations (1) to (5) are satisfied.

Fig. 6A, 6B, and 6C respectively show spherical aberration, astigmatism, and distortion in this embodiment. In these figures, d, F, and C represent the spherical aberration for the d-line, the F-line, and the C-line, respectively, NA represents the numerical aperture on the image side, Y' represents the image height, S represents "Sagital" and M represents "Meridional". Fig. 6A, 6B, and 6C are obtained by tracing a light beam from the object toward the image, and show that the aberrations are corrected properly.

Table 6 shows the telecentricities of the principal ray of an off-axis beam when the object height is 10 mm, 14 mm, and 20 mm. The signs + and - on the angle in the telecentricity represent that the principal ray diverges and converges, respectively, with respect to the optical axis when the principal ray travels from the object toward the objective lens. Table 6 also shows that the telecentricity of the principal ray of the off-axis beam is corrected properly.

Table 6

| Object Height (Y) mm | 10 | 14 | 20 |
|---|---|---|---|
| Telecentricity | +0.0007° | +0.0014° | -0.0007° |

Fourth Embodiment

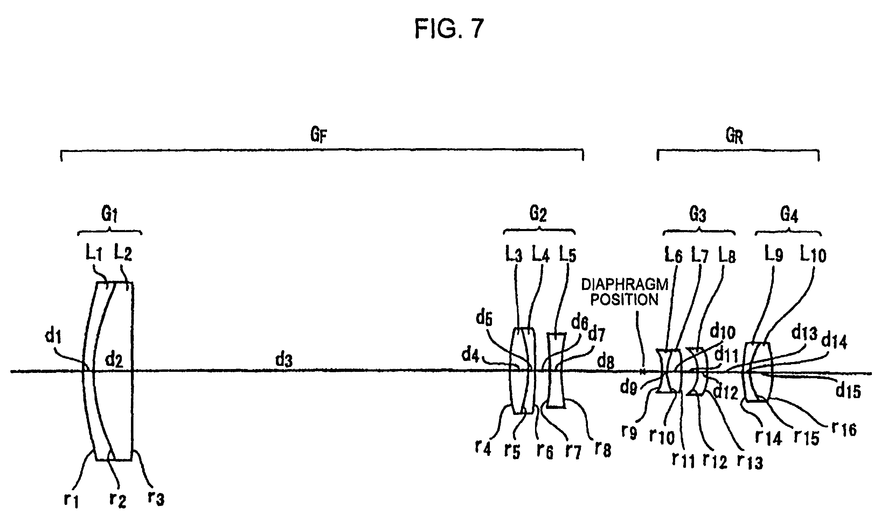

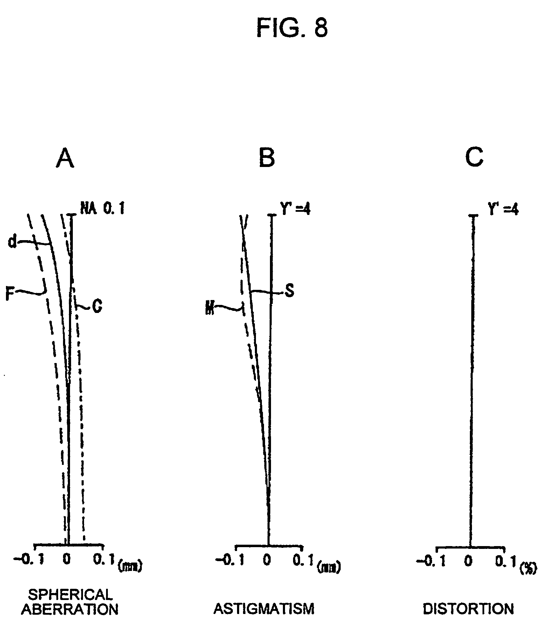

Fig. 7 shows the configuration of a double telecentric objective lens according to a fourth embodiment of the present invention, and Fig. 8A, 8B, and 8C respectively show spherical aberration, astigmatism, and distortion in the fourth embodiment.

The double telecentric objective lens of this embodiment is also composed of a front group $G_F$ having a positive refractive power as a whole and a rear group $G_R$ having a positive refractive power as a whole, in a manner similar to that in the first embodiment. The front group $G_F$ and the rear group $G_R$ are placed so that the back focus of the front group $G_F$ and the front focus of the rear group $G_R$ coincide with each other. A diaphragm is placed at the position where the focuses coincide.

The front group $G_F$ comprises a first unit $G_1$ formed of a cemented lens composed of a concave lens $L_1$ and a convex lens $L_2$, and having a positive refractive power as a whole, and a second unit $G_2$ including a cemented lens composed of a convex lens $L_3$ and a concave lens $L_4$, and a concave lens $L_5$ arranged in that order from the object side, and having a positive refractive power as a whole.

The rear group $G_R$ comprises a third unit $G_3$ including a cemented lens composed of a concave lens $L_6$ and a convex lens $L_7$, and a concave lens $L_8$ and having a positive refractive power as a whole, and a fourth unit $G_4$ formed of a cemented lens composed of a concave lens $L_9$ and a convex lens $L_{10}$, and having a positive refractive power as a whole.

In such a configuration, as an example the optical constants of the lenses are set as in Table 7 on conditions that the object position is -161.051 mm, the focal length of the front group (the focal length of the entire front group) $f_F$ is 150.01 mm, the image position is 26.213 mm, the focal length of the rear group is 30.01 mm, and the imaging magnification is -0.2X. The diaphragm is placed at a position offset by 26.03 mm from a surface $r_8$ toward the image.

Herein, $L_1$ to $L_{10}$ denote lenses, $r_1$ to $r_{16}$ denote the radii of curvature of the lenses, $d_1$ to $d_{15}$ denote the thicknesses of the lenses or the spaces therebetween, $n_1$ to $n_{10}$ denote the d-line refractive indices of the glass materials of the lenses, and $v_1$ to $v_{10}$ denote the Abbe's numbers of those glass materials.

Table 7

| | | | | | | | | |
|---|---|---|---|---|---|---|---|---|
| $r_1$ | 96.68 | $d_1$ | 3 | $n_1$ | 1.8061 | $v_1$ | 33.3 | $L_1$ |
| $r_2$ | 51.315 | $d_2$ | 12 | $n_2$ | 1.62041 | $v_2$ | 60.3 | $L_2$ |
| $r_3$ | -700 | $d_3$ | 120 | | | | | |
| $r_4$ | 88.766 | $d_4$ | 6 | $n_3$ | 1.7433 | $v_3$ | 49.2 | $L_3$ |
| $r_5$ | -33.937 | $d_5$ | 2 | $n_4$ | 1.59551 | $v_4$ | 39.2 | $L_4$ |
| $r_6$ | -134.849 | $d_6$ | 5 | | | | | |
| $r_7$ | -54 | $d_7$ | 3 | $n_5$ | 1.60738 | $v_5$ | 56.8 | $L_5$ |
| $r_8$ | 81.51 | $d_8$ | 32.583 | | | | | |
| $r_9$ | -12.159 | $d_9$ | 1.2 | $n_6$ | 1.54072 | $v_6$ | 47.2 | $L_6$ |
| $r_{10}$ | 10.16 | $d_{10}$ | 5 | $n_7$ | 1.741 | $v_7$ | 52.7 | $L_7$ |
| $r_{11}$ | -14.72 | $d_{11}$ | 5 | | | | | |
| $r_{12}$ | -7.8 | $d_{12}$ | 3 | $n_8$ | 1.51823 | $v_8$ | 59 | $L_8$ |
| $r_{13}$ | -14.259 | $d_{13}$ | 11 | | | | | |
| $r_{14}$ | 44.09 | $d_{14}$ | 2 | $n_9$ | 1.7495 | $v_9$ | 35 | $L_9$ |
| $r_{15}$ | 12.398 | $d_{15}$ | 6.5 | $n_{10}$ | 1.64 | $v_{10}$ | 60.2 | $L_{10}$ |
| $r_{16}$ | -27.837 | | | | | | | |

Calculations are made using the above inequations (1) to (5) on the basis of the above optical constants of the lenses:

$$n_{1n}\text{-}n_{1p} = 0.18569$$

$$\nu_{1p}\text{-}\nu_{1n} = 27$$

$$|r_{2n}| = 0.36\, f_F$$

$$(r_2p\,/r_2n\,) = 2.5$$

$$n_3n = 1.52948 < n_3p = 1.741$$

Hence, all the inequations (1) to (5) are satisfied.

Fig. 8A, 8B, and 8C respectively show spherical aberration, astigmatism, and distortion in this embodiment, respectively. In these figures, d, F, and C represent the spherical aberration for the d-line, the F-line, and the C-line, respectively, NA represents the numerical aperture on the image side, Y' represents the image height, S represents "Sagital" and M represents "Meridional". Fig. 8A, 88, and 8C are obtained by tracing a light beam from the object toward the image and show that the aberrations are corrected properly.

Table 8 shows the telecentricities of the principal ray of an off-axis beam when the object height is 10 mm, 14 mm, and 20 mm. The signs + and - on the angle in the telecentricity represent that the principal ray diverges and converges, respectively, with respect to the optical axis when the principal ray travels from the object toward the objective lens. Table 8 also shows that the telecentricity of the principal ray of the off-axis beam is corrected properly.

Table 8

| Object Height (Y) mm | 10 | 14 | 20 |
|---|---|---|---|
| Telecentricity | +0.0004° | +0.0011° | -0.0017° |

While the focal length of the front group is approximately 150 mm, the focal length of the rear group is approximately 30 mm, and the magnification is approximately 0.2X in the double telecentric objective lenses of the above embodiments, the objective lenses can be used as a double telecentric objective lens of 0.1X, for example, by doubling the focal length of the front group to 300 mm and placing the rear focus of the front group in accordance with the telecentric diaphragm.

While the values in the above embodiments are set when the image height Y' is 4 mm, the double telecentric objective lenses can be used as a double telecentric objective lens having an image height Y' of 8 mm by doubling the values.

It is, of course, possible to change the magnification and to increase or decrease the effective image circle, as described above, within the scope of the invention.

According to the present invention, it is possible to achieve a double telecentric objective lens having a magnification of approximately 0.2X in which aberrations and the telecentricity of the principal ray of an off-axis beam are corrected properly, and which is suitable for use in an image processing and measuring apparatus.

While the present invention has been described with reference to what are presently considered to be the preferred embodiments, it is to be understood that the invention is not limited to the disclosed embodiments. On the contrary, the invention is intended to cover various modifications and equivalent arrangements included within the scope of the appended claims.

## Claims

1. A double telecentric objective lens having a double telecentric optical system,
   wherein said double telecentric optical system comprises:

a front group ($G_F$) having a positive refractive power as a whole; and
a rear group ($G_R$) having a positive refractive power as a whole,

wherein the rear focus of said front group ($G_F$) and the front focus of said rear group ($G_R$) coincide with each other, and a diaphragm is placed at the position where the focuses coincide,

wherein said front group ($G_F$) includes a first unit ($G_1$) formed of a cemented lens composed of a convex lens ($L_1$; $L_2$) and a concave lens ($L_2$; $L_1$), and having a positive refractive power as a whole; and a second unit ($G_2$) including a convex lens ($L_3$) or a cemented lens composed of a convex lens ($L_3$) and a concave lens ($L_4$), and a further concave lens ($L_4$; $L_5$), arranged in that order from an object side, and having a positive refractive power as a whole,

wherein said rear group ($G_R$) includes a third unit ($G_3$) including a concave lens ($L_5$; $L_6$; $L_8$) and a cemented lens composed of a concave lens ($L_6$; $L_7$; $L_6$) and a convex lens ($L_7$; $L_8$; $L_7$), and having a positive refractive power as a whole; and a fourth unit ($G_4$) formed of a cemented lens composed of a concave lens ($L_8$; $L_9$) and a convex lens ($L_9$; $L_{10}$), and having a positive refractive power as a whole, and

wherein the following conditions are satisfied:

$$n_{1n} - n_{1p} > 0.1 \tag{1}$$

$$\nu_{1p} - \nu_{1n} > 25 \tag{2}$$

$$0.3f_F < |r_{2n}| < 0.5f_F \tag{3}$$

$$1.4 < (r_{2p}/r_{2n}) < 2.7 \tag{4}$$

$$n_{3n} < n_{3p} \tag{5}$$

where $n_{1p}$ and $\nu_{1p}$ respectively represent the refractive index and the Abbe's number of said convex lens ($L_1$; $L_2$) of said first unit ($G_1$), $n_{1n}$ and $\nu_{1n}$ respectively represent the refractive index and the Abbe's number of said concave lens ($L_2$; $L_1$) of said first unit ($G_1$), $r_{2p}$ represents the radius of curvature of that surface of said convex lens ($L_3$) or said cemented lens composed of said convex lens ($L_3$) and said concave lens ($L_4$) in said second unit ($G_2$) that is furthermost from the object, $r_{2n}$ represents the radius of curvature of the object-side surface of said further concave lens ($L_4$; $L_5$) in said second unit ($G_2$), $f_F$ represents the focal length of said entire front group ($G_F$), $n_{3n}$ represents the average refractive index of said concave lenses ($L_5$, $L_6$; $L_6$, $L_7$) in said third unit ($G_3$), and $n_{3p}$ represents the refractive index of said convex lens ($L_7$; $L_8$) in said third unit ($G_3$), the refractive indices and the focal length being values for the d-line having a wavelength of 587.56 nm.

2. The lens according to claim 1, wherein the focal length $f_F$ of the front group ($G_F$) is approximately 150 mm, the focal length of the rear group ($G_R$) is approximately 30 mm, and the magnification is approximately 0.2X.

3. The lens according to claim 1, wherein the focal length $f_F$ of the front group ($G_F$) is approximately 300 mm, the focal length of the rear group ($G_R$) is approximately 30 mm, and the magnification is approximately 0.1X.

**Patentansprüche**

1. Doppeltelezentrisches Objektiv mit einem doppeltelezentrischen optischen System,
   bei dem das doppeltelezentrische optische System aufweist:

   eine vordere Gruppe ($G_F$) mit einer insgesamt positiven Brechkraft; und
   eine hintere Gruppe ($G_R$) mit einer insgesamt positiven Brechkraft,
   bei der der hintere Brennpunkt der vorderen Gruppe ($G_F$) und der vordere Brennpunkt der hinteren Gruppe ($G_R$) zusammenfallen und an der Stelle, an der die Brennpunkte zusammenfallen, eine Blende angeordnet ist,

bei der die vordere Gruppe ($G_F$) eine erste Einheit ($G_1$) aufweist, die von einer aus einer konvexen Linse ($L_1$; $L_2$) und einer konkaven Linse ($L_2$; $L_1$) bestehenden geklebten Linse gebildet wird und eine insgesamt positive Brechkraft aufweist; und eine zweite Einheit ($G_2$), die von einer konvexen Linse ($L_3$) oder einer aus einer konvexen Linse ($L_3$) und einer konkaven Linse ($L_4$) bestehenden geklebten Linse und einer weiteren konkaven Linse ($L_4$; $L_5$) gebildet wird, die in dieser Reihenfolge von der Objektseite angeordnet sind und eine insgesamt positive Brechkraft besitzen,

bei der die hintere Gruppe ($G_R$) eine dritte Einheit ($G_3$) aufweist, die von einer konkaven Linse ($L_5$; $L_6$; $L_8$) und einer aus einer konkaven Linse ($L_6$; $L_7$; $L_6$) und einer konvexen Linse ($L_7$; $L_8$; $L_7$) bestehenden geklebten Linse gebildet wird und eine insgesamt positive Brechkraft aufweist; und eine vierte Einheit ($G_4$), die von einer aus einer konkaven Linse ($L_8$; $L_9$) und einer konvexen Linse ($L_9$; $L_{10}$) bestehenden geklebten Linse gebildet wird und eine insgesamt positive Brechkraft aufweist, und

bei der die folgenden Bedingungen erfüllt werden:

$$n_{1n}-n_{1p} > 0,1 \tag{1}$$

$$\nu_{1p}-\nu_{1n} > 25 \tag{2}$$

$$0,3f_F < |r_{2n}| < 0,5f_F \tag{3}$$

$$1,4 < (r_{2p}/r_{2n}) < 2,7 \tag{4}$$

$$n_{3n} < n_{3p} \tag{5}$$

wobei $n_{1p}$ und $\nu_{1p}$ den Brechungsindex bzw. die Abbe'sche Zahl der konvexen Linse ($L_1$; $L_2$) der ersten Einheit ($G_1$) darstellen, $n_{1n}$ und $\nu_{1n}$ den Brechungsindex bzw. die Abbe'sche Zahl der konkaven Linse ($L_2$; $L_1$) der ersten Einheit ($G_1$) darstellen, $r_{2p}$ den Krümmungsradius der Oberfläche der konvexen Linse ($L_3$) oder der aus der konvexen Linse ($L_3$) und der konkaven Linse ($L_4$) bestehenden geklebten Linse der zweiten Einheit ($G_2$) mit dem größten Abstand zum Objekt darstellt, $r_{2n}$ den Krümmungsradius der objektseitigen Oberfläche der weiteren konkaven Linse ($L_4$; $L_5$) der zweiten Einheit ($G_2$) darstellt, $f_F$ die Brennweite der gesamten vorderen Gruppe ($G_F$) darstellt, $n_{3n}$ den mittleren Brechungsindex der konkaven Linsen ($L_5$, $L_6$; $L_6$, $L_7$) der dritten Einheit ($G_3$) darstellt und $n_{3p}$ den Brechungsindex der konvexen Linse ($L_7$; $L_8$) der dritten Einheit ($G_3$) darstellt, wobei die Brechungsindizes und die Brennweite Werte der d-Linie mit einer Wellenlänge von 587,56 nm sind.

2. Objektiv nach Anspruch 1, bei dem die Brennweite $f_F$ der vorderen Gruppe ($G_F$) ca. 150 mm, die Brennweite der hinteren Gruppe ($G_R$) ca. 30 mm und die Vergrößerung ca. 0,2 beträgt.

3. Objektiv nach Anspruch 1, bei dem die Brennweite $f_F$ der vorderen Gruppe ($G_F$) ca. 300 mm, die Brennweite der hinteren Gruppe ($G_R$) ca. 30 mm und die Vergrößerung ca. 0,1 beträgt.

**Revendications**

1. Objectif télécentrique double ayant un système optique télécentrique double dans lequel ledit système optique télécentrique double comprend :

un groupe avant ($G_F$) ayant un pouvoir réfringent positif dans son ensemble ; et
un groupe arrière ($G_R$) ayant un pouvoir réfringent positif dans son ensemble,

dans lequel le foyer arrière dudit groupe avant ($G_F$) et le foyer avant dudit groupe arrière ($G_R$) coïncident l'un avec l'autre, et un diaphragme est placé à la position où les foyers coïncident,
dans lequel ledit groupe avant ($G_F$) comporte une première unité ($G_1$) formée d'une lentille collée composée d'une lentille convexe ($L_1$ ; $L_2$) et d'une lentille concave ($L_2$ ; $L_1$), et ayant un pouvoir réfringent positif dans son ensemble ; et une seconde unité ($G_2$) comportant une lentille convexe ($L_3$) ou une lentille collée composée d'une lentille convexe ($L_3$) et d'une lentille concave ($L_4$), et une autre lentille concave ($L_4$ ; $L_5$), agencées dans cet ordre en partant d'un côté objet, et ayant un pouvoir réfringent positif dans son ensemble,

dans lequel ledit groupe arrière ($G_R$) comprend une troisième unité ($G_3$) comportant une lentille concave ($L_5$ ; $L_6$; $L_8$) et une lentille collée composée d'une lentille concave ($L_6$ ; $L_7$ ; $L_6$) et d'une lentille convexe ($L_7$ ; $L_8$ ; $L_7$), et ayant un pouvoir réfringent positif dans son ensemble ; et une quatrième unité ($G_4$) formée d'une lentille collée composée d'une lentille concave ($L_8$ ; $L_9$) et d'une lentille convexe ($L_9$ ; $L_{10}$), et ayant un pouvoir réfringent positif dans son ensemble ; et

dans lequel les conditions suivantes sont satisfaites :

$$n_{1n}-n_{1p} > 0,1 \tag{1}$$

$$\nu_{1p}- \nu_{1n} > 25 \tag{2}$$

$$0,3f_F < |r_{2n}| < 0,5f_F \tag{3}$$

$$1,4 < (r_{2p}/r_{2n}) < 2, 7 \tag{4}$$

$$n_{3n} < n_{3p} \tag{5}$$

où $n_{1p}$ et $\nu_{1p}$ représentent respectivement l'indice de réfraction et le nombre d'Abbe de ladite lentille convexe ($L_1$; $L_2$) de ladite première unité ($G_1$), $n_{1n}$ et $\nu_{1n}$ représentent respectivement l'indice de réfraction et le nombre d'Abbe de ladite lentille concave ($L_2$; $L_1$) de ladite première unité ($G_1$), $r_{2p}$ représente le rayon de courbure de la surface de ladite lentille convexe ($L_3$) ou de ladite lentille collée composée de ladite lentille convexe ($L_3$) et de ladite lentille concave ($L_4$) dans ladite seconde unité ($G_2$), qui est la plus en avant par rapport à l'objet, $r_{2n}$ représente le rayon de courbure de la surface du côté objet de ladite autre lentille concave ($L_4$ ; $L_5$) dans ladite seconde unité ($G_2$), $f_F$ représente la distance focale de la totalité dudit groupe avant ($G_F$), $n_{3n}$ représente l'indice de réfraction moyen desdites lentilles concaves ($L_5$, $L_6$; $L_6$, $L_7$) dans ladite troisième unité ($G_3$), et $n_{3p}$ représente l'indice de réfraction de ladite lentille convexe ($L_7$ ; $L_8$) dans ladite troisième unité ($G_3$), les indices de réfraction et la longueur focale étant des valeurs pour la raie d ayant une longueur d'onde de 587,56 nm.

2. Objectif selon la revendication 1, dans lequel la distance focale $f_F$ du groupe avant ($G_F$) est d'environ 150 mm, la distance focale du groupe arrière ($G_R$) est d'environ 30 mm, et le grossissement est d'environ 0,2X.

3. Objectif selon la revendication 1, dans lequel la distance focale $f_F$ du groupe avant ($G_F$) est d'environ 300 mm, la distance focale du groupe arrière ($G_R$) est d'environ 30 mm, et le grossissement est d'environ 0,1X.

FIG. 1

# FIG. 2

A — SPHERICAL ABERRATION

B — ASTIGMATISM

C — DISTORTION

FIG. 3

# FIG. 4

A           B           C

NA 0.1

d

F

C

-0.1 0 0.1 (mm)

SPHERICAL
ABERRATION

Y'=4

S   M

-0.1 0 0.1 (mm)

ASTIGMATISM

Y'=4

-0.1 0 0.1 (%)

DISTORTION

FIG. 5

EP 1 273 949 B1

FIG. 6

A

NA 0.1

F d
C

-0.1  0  0.1 (mm)

SPHERICAL
ABERRATION

B

Y'=4

S M

-0.1  0  0.1 (mm)

ASTIGMATISM

C

Y'=4

-0.1  0  0.1 (%)

DISTORTION

FIG. 7

EP 1 273 949 B1

EP 1 273 949 B1

## FIG. 8

A — SPHERICAL ABERRATION

B — ASTIGMATISM

C — DISTORTION

21